**Europäisches Patentamt**

(19) **European Patent Office**

**Office européen des brevets**

(11) Veröffentlichungsnummer: **0 088 281**
**B1**

(12) # EUROPÄISCHE PATENTSCHRIFT

(45) Veröffentlichungstag der Patentschrift:
23.07.86

(51) Int. Cl.⁴: **B 60 Q 3/04,** G 02 F 1/133,
G 02 B 6/04

(21) Anmeldenummer: 83101685.2

(22) Anmeldetag: 22.02.83

(54) Anzeigevorrichtung, insbesondere für Kraftfahrzeuge.

(30) Priorität: 05.03.82 DE 3207871

(43) Veröffentlichungstag der Anmeldung:
14.09.83 Patentblatt 83/37

(45) Bekanntmachung des Hinweises auf die Patenterteilung:
23.07.86 Patentblatt 86/30

(84) Benannte Vertragsstaaten:
DE FR GB IT SE

(56) Entgegenhaltungen:
DE-A-2 552 278
DE-A-2 902 745

(73) Patentinhaber: ROBERT BOSCH GMBH, Postfach 50, D-7000 Stuttgart 1 (DE)

(72) Erfinder: Ziegler, Wolfgang, Dr.- Ing., Philipp- Reis- Strasse 52, D-8510 Fürth (DE)
Erfinder: Knoll, Peter, Dr., Neuwiesenrebenstrasse 42, D-7505 Ettlingen (DE)

EP 0 088 281 B1

LIBER. STOCKHOLM 1986

## Beschreibung

Die Erfindung betrifft eine Vorrichtung zur Anzeige von Betriebszuständen nach der Gattung des Patentanspruchs 1.

Bei einer aus der DE-A-2 902 745 bekannten Anzeigevorrichtung dieser Art wird zur Beleuchtung eines Flüssig-Kristall-Displays (LCD) eine zusätzliche Lichtquelle im Rückteil eines Panels angeordnet, dessen Licht über einen Lichtleiter auf einen begrenzten Bereich der LCD ausgekoppelt wird. Der lichtauskoppelnde Bereich des Lichtleiters liegt dabei unmittelbar hinter den transflektiven Flüssigkristallzellen, so daß in den angesteuerten Bereichen der LCD das Licht nach vorne austreten kann. Will man bei dieser Lösung keine erheblichen Lichtverluste bei ausreichender Ausleuchtung der Flüssigkristallzellen in Kauf nehmen, so muß der Lichtleiter zur Auskopplung des Lichtes in den begrenzten Bereichen der Flüssigkristallzellen auf einer Seite aufgerauht werden. Derartige Lösungen lassen sich jedoch nur für LCDs verwenden, die im Durchlichtverfahren beleuchtet werden. Sie sind bei reflektiven Flüssigkristallzellen nicht verwendbar, da in solchen Fällen der Lichtleiter mit dem aufgerauhten Bereich vor der LCD angeordnet werden müßte und damit die Ablesbarkeit der Anzeige erheblich beeinträchtigen würde.

Der Erfindung liegt die Aufgabe zugrunde, bei Anzeigen in einem Kraftfahrzeug-Panel die Ablesbarkeit reflektiver Flüssigkristallzellen mit einer Lichtquelle im Rückteil des Panels zu verbessern.

Diese Aufgabe wird mit den kennzeichnenden Merkmalen des Patentanspruchs 1 gelöst. Damit wird in vorteilhafter Weise zu dem von außen auf die Anzeigevorrichtung fallenden Licht das zusätzliche Licht der Lichtquelle im Kfz-Panel zur Verbesserung der Ablesbarkeit verwendet, in dem das Licht der zusätzlichen Lichtquelle über einen Lichtleiter auf einen eng begrenzten Bereich der Vorrichtung nach vorne auf das Display gelenkt wird. In weiterer Ausgestaltung der Erfindung kann das Licht über einen Lichtleiter aus Acrylglas oder einem anderen glasartigen Kunststoff nach vorn auf das Display geleitet werden.

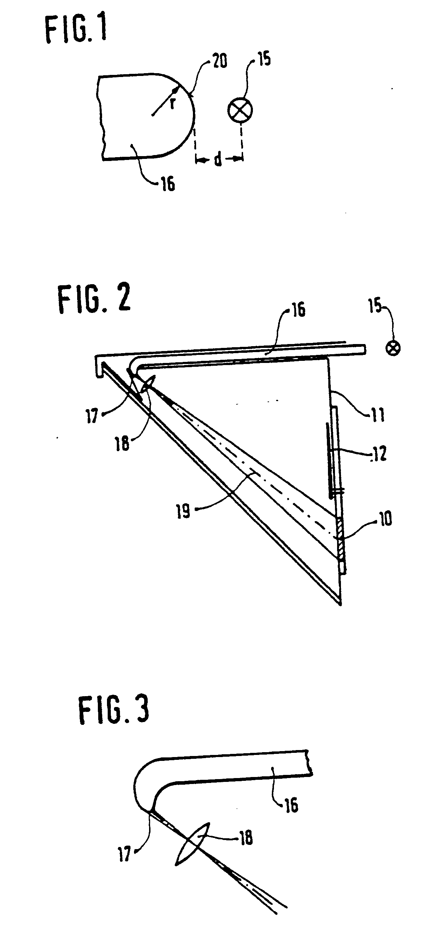

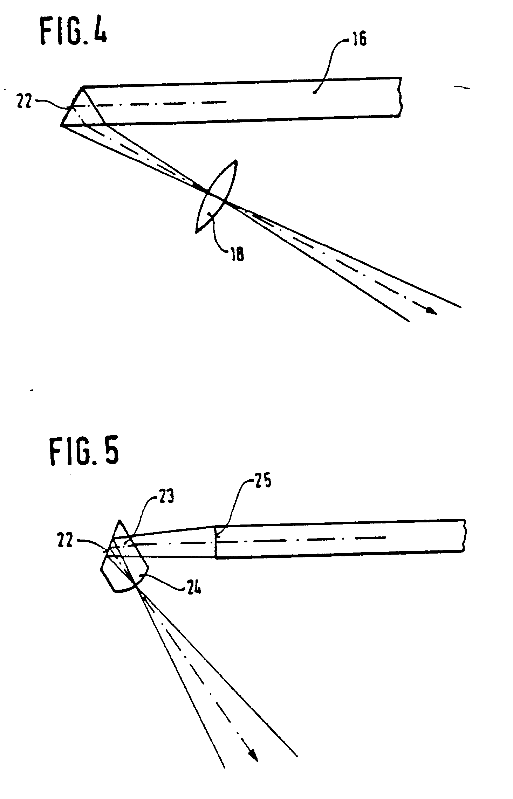

Die Erfindung ist nachstehend anhand von Ausführungsbeispielen, die in der Zeichnung teilweise schematisch dargestellt sind, näher beschrieben und erläutert. Es zeigen Figur 1 die Lichtquelle mit dem ihr zugewandten Enda eines Lichtleiters, Figur 2 die erfindungsgemäße Anzeigevorrichtung mit der Lichtquelle und dem Lichtleiter aus Figur 1, Figur 3 zeigt das umgebogene vordere Ende des Lichtleiters nach Figur 1, Figur 4 zeigt ein abgeschrägtes und verspiegeltes vorderes Ende des Lichtleiters zur Umlenkung des Lichtes und Figur 5 zeigt den Lichtleiter mit einem Prisma zur Lichtumlenkung.

Beim Einsatz von reflektiven LC-Displays 10 in einem Kfz-Panel 11, in welchem konventionelle Zeigerinstrumente 12 vorgesehen sind, muß eine gute Ablesbarkeit durch zusätzliche Beleuchtung der LCD gewährleistet sein, wobei das Niveau de übrigen Beleuchtung hiervon unberührt bleibt.

Hierzu ist gemäß Figur 2 das Licht einer im Rückteil des Panels 11 angeordneten Glühlampe 15 über einen Lichtleiter 16, der aus Plexiglas ode aus Acrylglas besteht, auf einen auf das Display 10 eng begrenzten Bereich vom Rückteil des Panels 11 ausgehend möglichst weit nach vorn v das Display geleitet und im Bereich des vorderer Lichtleiterendes gegen das Display 10 umgelenk Dabei ist der Lichtleiter 16 an seinem der Lichtquelle 15 abgekehrten, vorderen Endabschnitt zur Umlenkung der Lichtstrahlen u etwa 120° bis 150° gegen das Display zurückgebogen.

Die in Figur 3 in vergrößerter Darstellung ausschnittsweise wiedergegebene Lichtauskoppelfläche 17 am vorderen Ende des Lichtleiters 16 ist aufgerauht. Über eine kurzbrennweitige Linse 18 geringerer Güte, die ebenfalls aus Plexiglas oder aus Acrylglas bestehen kann, wird die Auskoppelfläche 17 auf das Display 10 abgebildet. Die Brennweite der Linse, die Abstände zwischen Auskoppelfläche und Linse 18 sowie zwischen Linse 18 und dem Display 10 sowie die Form der Auskoppelfläche richten sich nach den bekannten Abbildungsgesetzen.

Zur Optimierung das Wirkungsgrades der erfindungsgemäßen Anordnung sollte die Einkoppelfläche des Lichtleiters 16, dessen hinteres Ende in Figur 1 dargestellt ist, so ausgebildet sein, daß der Lichtleiter 16 an seine der Lichtquelle 15 zugekehrten Kopfteil 20 zylindrisch oder kugelförmig mit einem Radius i gerundet ist, der wenigstens annähernd den Abstand d der Lichtquelle 15 vom Scheitelpunk des Kopfteiles 20 entspricht.

Zur notwendigen Umlenkung des Strahlenverlaufs haben sich drei Anordnungen geeignet erwiesen: nämlich das Abbiegen des Lichtleiterendes gemäß Figur 2 und 3; die Verspiegelung der aufgerauhten und abgeschrägten Auskoppelfläche 22 gemäß Figi an welche das Licht reflektiert wird und wobei zwischen der schräggestellten Auskoppelfläch und dem Display 10 die Linse 18 angeordnet ist und eine Kombination aus einem Prisma 23 mit schrägstehenden, aufgerauhten und verspiege Auskoppelfäche 22 und einer angeformten Lins 24 gemäß Figur 5 sowie mit einer aufgerauhter Stirnfläche 25 am vorderen Ende des Lichtleite 16. Bei dieser Anordnung sind die Linse 24 und Auskoppelfläche 22 in einem einstückigen Pris Linsen-Körper 23 vereinigt.

Der Vorteil der erfindungsgemäßen Anordnu besteht in der guten Ablesbarkeit der reflektiv LCD 10, wobei eine schärfere Begrenzung der zusätzlich beleuchteten Flächen der Anzeigevorrichtung durch einen hohen Wirkungsgrad der zusätzlichen Beleuchtung erzielt wird.

**Patentansprüche**

1. Vorrichtung zur Anzeige von Betriebszuständen, insbesondere eines Kraftfahrzeuges, mit Hilfe von wenigstens einem Flüssig-Kristall-Display (LCD), bei dem eine zusätzliche Lichtquelle (15) vorgesehen ist, die im Rückteil eines Panels (11) angeordnet ist und das Licht über einen Lichtleiter (16) auf einen auf das Display (10) eng begrenzten Bereich leitet, dadurch gekennzeichnet, daß das Licht (19) im Lichtleiter (16) vom Rückteil des Panels (11) ausgehend nach vorn vor das Display (10) geleitet und im Bereich des vorderen Lichtleiterendes gegen das Display (10) umgelenkt ist.

2. Vorrichtung nach Anspruch 1, dadurch gekennzeichnet, daß der Lichtleiter (16) an seinem der Lichtquelle (15) zugekehrten Kopfteil (20) zylindrisch oder kugelförmig mit einem Radius (r) gerundet ist, der wenigstens annähernd dem Abstand (d) der Lichtquelle (15) vom Scheitelpunkt des Kopfteils (20) entspricht.

3. Vorrichtung nach Anspruch 2, dadurch gekennzeichnet, daß der Lichtleiter (16) an seinem von der Lichtquelle (15) abgekehrten, vorderen Endabschnitt zur Umlenkung der Lichtstrahlen um etwa 120° bis 150° gegen das Display (10) zurückgebogen ist.

4. Vorrichtung nach Anspruch 2 oder 3, dadurch gekennzeichnet, daß der Lichtleiter (16) eine aufgerauhte Auskoppelfläche (17, 22, 25) aufweist.

5. Vorrichtung nach Anspruch 4, dadurch gekennzeichnet, daß zwischen der schräggestellten, aufgerauhten und vorzugsweise verspiegelten Auskoppelfläche (22) und dem Display (10) eine Linse (18, 24) angeordnet ist.

6. Vorrichtung nach Anspruch 5, dadurch gekennzeichnet, daß die Linse (24) und die Auskoppelfläche (22) in einem einstuckigen Prisma-Linsen-Körper (23) vereinigt sind.

**Claims**

1. Device for displaying operational conditions, in particular of a motor vehicle, with the aid of at least one liquid-crystal display (LCD) in which an additional light source (15) is provided which is arranged in the rear section of a panel (11) and guides the light via an optical waveguide (16) to an area which is narrowly confined to the display (10), characterised in that the light (19) in the optical waveguide (16), starting from the rear section of the panel (11), is guided forward in front of the display (10) and is deflected towards the display (10) in the area of the front end of the optical waveguide.

2. Device according to Claim 1, characterised in that the head part (20), facing the light source (15), of the optical waveguide (16) is cylindrically or spherically rounded with a radius (r) which at least approximately corresponds to the distance (d) of the light source (15) from the apex of the head part (20).

3. Device according to Claim 2, characterised in that the front end section, facing away from the light source (15), of the optical waveguide (16) is bent back towards the display (10) for deflecting the light rays by about 120° to 150°.

4. Device according to Claim 2 or 3, chäracterised in that the optical waveguide (16) has a roughened output surface (17, 22, 25).

5. Device according to Claim 4, characterised in that a lens (18, 24) is arranged between the inclined, roughened and preferably silvered output surface (22) and the display

6. Device according to Claim 5, characterised in that the lens (24) and the output surface (22) are combined in a one-prism lens body (23).

**Revendications**

1) Dispositif pour l'indication d'états de fonctionnement d'un véhicule automobile, à l'aide d'au moins un affichage à cristaux liquides (LCD), dans lequel il est prévu une source de lumière (l5) supplémentaire, qui est disposée sur la partie arrière d'un panneau (11) et qui envoie la lumière, au moyen d'un conducteur (16) de lumière, sur une zone étroitement limitée de l'affichage (10), dispositif caractérisé en ce que la lumière (19) qui est dans le conducteur (16) de lumière est envoyée, à partir de la partie arrière du panneau (11), vers l'avant, devant l'affichage (10) et est renvoyée sur cet affichage (10) dans la zone de l'extrémité avant du conducteur de lumière.

2) Dispositif suivant la revendication 1, caractérisé en ce que le conducteur (16) de lumière est arrondi, sur sa partie de tete (20), tournée vers la source lumineuse (15) en forme de cylindre ou de sphère, avec un rayon (r) qui correspond, au moins approximativement à la distance (d) qui separe la source lumineuse (15) du sommet de la partie de tête (20).

3) Dispositif suivant la revendication 2, caractérisé en ce que le conducteur de lumière (16) est retourné vers l'arrière, sur sa section d'extrémité avant, qui est à l'opposé de la source de lumière (15), pour renvoyer les rayons lumineux sur environ 120 à 150°, vers l'affichage (10).

4) Dispositif suivant l'une des revendications 2 ou 3, caractérisé en ce que le conducteur de lumière (16) présente une surface de sortie dépolie (17, 22, 25).

5) Dispositif suivant la revendication 4, caractérisé en ce que, entre la surface de sortie inclinée, dépolie, et avantageusement métallisée (22), et l'affichage (10), il est disposé une lentille (18, 24).

6) Dispositif suivant la revendication 5, caractérisé en ce que la lentille (24), et la surface de sortie (22) sont réunies en un corps prisme-lentille d'une seule pièce.

FIG.1

FIG. 2

FIG.3

# FIG. 4

# FIG. 5